# EUROPÄISCHE PATENTSCHRIFT

(11) **EP 3 680 132 B1**
(45) Veröffentlichungstag und Bekanntmachung des Hinweises auf die Patenterteilung: **09.10.2024**
(21) Anmeldenummer: 20151535.0
(22) Anmeldetag: 13.01.2020
(51) Int. Cl.: B60P 3/39, A47C 17/80

(54) **LAGERUNGSELEMENT FÜR EIN HUBBETT**
BEARING ELEMENT FOR A LIFTING BED
ÉLÉMENT DE RANGEMENT POUR UNE COUCHETTE REPLIABLE

(30) Priorität: 14.01.2019 DE 102019100856
(43) Veröffentlichungstag der Anmeldung: 15.07.2020
(73) Patentinhaber: PRO Giehl GmbH, 67806 Rockenhausen (DE)
(72) Erfinder: Rauch, Walter, 67806 Rockenhausen (DE); Türkmen, Murat, 67806 Rockenhausen (DE)
(74) Vertreter: Patentanwaltskanzlei Vièl & Wieske PartGmbB

(56) Entgegenhaltungen:
- DE-A1- 10 146 382
- DE-U1- 202015 102 995
- FR-A1- 2 788 206

## Beschreibung

Die vorliegende Erfindung betrifft ein Lagerungselement für ein Hubbett gemäß Anspruch 1.

Hubbetten werden beispielsweise in Campingmobilen, Wohnwagen oder auch auf Booten eingesetzt. Derartige Hubbetten weisen eine obere Position auf, in der das Hubbett nach oben bewegt ist und beispielsweise direkt unter der Decke hängt. Das hat den Vorteil, dass der Platz unter dem Hubbett anderweitig genutzt werden kann. Beispielsweise kann dort ein Tisch mit einer Sitzbank angeordnet werden. Das Hubbett weist außerdem eine abgesenkte Position auf. In dieser abgesenkten Position ist das Hubbett nach unten geschwenkt in eine Gebrauchsstellung. Bei der vorliegenden Erfindung geht es um ein Lagerungselement für ein Hubbett, um die dafür erforderliche Schwenkbewegung zu realisieren.

Aus der DE 10 2012 102 609 B4 ist bereits ein Lagerungselement für ein Hubbett bekannt. Das Lagerungselement weist einen Primär- und einen Sekundärarm auf. Sowohl der Primär- als auch der Sekundärarm weisen an ihrem ersten Ende einen ersten Befestigungspunkt auf zur wand- und/oder deckenseitigen Befestigung. Dabei sind sowohl der Primär- als auch der Sekundärarm mit dem ersten Befestigungspunkt drehbeweglich gelagert. Sowohl der Primär- als auch der Sekundärarm weisen einen zweiten Befestigungspunkt auf, der sich an dem zweiten Ende des Primär- sowie des Sekundärarms befindet. Sowohl der Primär- als auch der Sekundärarm sind mit dem zweiten Befestigungspunkt an einem Rahmenteil des Bettrahmens des Hubbettes drehbeweglich befestigt.

Die Konstruktion dieses Lagerungselementes macht es erforderlich, dass bei beiden Armen der erste oder der zweite Befestigungspunkt in einem Langloch geführt sind.

Aus der DE 101 46 382 A1 ist ein Hubbett bekannt, dessen Aufhängung einen Primär- und einen Sekundärarm aufweist. Sowohl der Primärarm als auch der Sekundärarm weisen an ihren beiden Enden jeweils einen Befestigungspunkt auf. Sowohl der Primärarm als auch der Sekundärarm sind über einen dieser Befestigungspunkte drehbeweglich mit einer wand- oder deckenseitigen Aufhängung des Hubbettes verbunden. Sowohl der Primärarm als auch der Sekundärarm sind über den anderen dieser beiden Befestigungspunkte drehbeweglich mit dem Rahmen des Hubbettes verbunden. Der Primär- und der Sekundärarm sind in einem Verbindungspunkt drehbeweglich miteinander verbunden. Dieser Verbindungspunkt liegt sowohl in der Länge des Primärarms als auch in der Länge des Sekundärarms zwischen den beiden Befestigungspunkten. Einer der beiden Befestigungspunkte sowohl des Primärarms als auch des Sekundärarms ist mittelbar über ein Verbindungselement befestigt. Dieses Verbindungselement ist mit seinem einen Ende drehbeweglich an dem jeweiligen Befestigungspunkt des betreffenden Arms angebracht. Das Verbindungselement des Primärarms ist mit seinem anderen Ende drehbeweglich am Hubbett angebracht. Das Verbindungselement des Sekundärarms ist mit einem anderen Ende drehbeweglich wand- oder deckenseitig angebracht.

Aus der DE 20 2015 102 995 U1 ist es bekannt, bei einem Campingfahrzeug ein Staufach im Bodenbereich vorzusehen. Der Boden des Staufachs kann mit der Konstruktion eines Scherenhubtischs angehoben werden.

Demgegenüber wird mit der vorliegenden Erfindung eine andere Lösung vorgeschlagen. Der Lösung liegt die Aufgabe zu Grunde, dass das Hubbett im zusammengeklappten Zustand möglichst platzsparend ist, wobei gleichzeitig einer ausreichenden Stabilität der Konstruktion des Hubbettes im ausgeklappten Zustand vorhanden sein soll.

Nach Anspruch 1 sind dazu der Primär- und der Sekundärarm in einem Verbindungspunkt drehbeweglich miteinander verbunden. Zumindest einer der beiden Befestigungspunkte des einen Arms ist mittelbar über ein Verbindungselement befestigt. Das Verbindungselement ist mit seinem einen Ende drehbeweglich an dem jeweiligen Befestigungspunkt des betreffenden Arms angebracht. Das Verbindungselement ist und mit seinem anderen Ende drehbeweglich
> entweder wand- und/oder deckenseitig
> oder an dem Rahmenteil des Bettrahmens des Hubbettes befestigt.

Um die Hubbewegung des Hubbettes realisieren zu können, muss - sofern im Sinne des Anspruchs 1 der erste Befestigungspunkt eines der beiden Arme mittels des Verbindungselementes befestigt ist - der zweite Befestigungspunkt eines der beiden Arme entweder in einem Langloch oder in einer Schiene geführt sein oder ebenfalls mittels eines Verbindungselementes befestigt sein.

Ist im Sinne des Anspruchs 1 der zweite Befestigungspunkt eines der beiden Arme mittels des Verbindungselementes befestigt, muss der erste Befestigungspunkt eines der beiden Arme entweder in einem Langloch oder in einer Schiene geführt sein oder ebenfalls mittels eines Verbindungselementes befestigt sein.

Ob das Verbindungselement dabei wand- und/oder deckenseitig bzw. an dem Rahmenteil des Bettrahmens des Hubbettes angebracht ist, hängt dabei davon ab, ob das Verbindungselement an dem ersten Ende oder an dem zweiten Ende des jeweiligen Arms angebracht ist.

Mit dieser Konstruktion ist es an dem Ende, an dem das Verbindungselement an dem Arm angebracht ist, nicht mehr notwendig, die Lagerung des Befestigungspunktes mittels eines Langlochs verschiebbar zu gestalten. Dies hat beispielsweise Vorteile, wenn das Verbindungselement an der wand- und/oder deckenseitigen Befestigung angebracht wird. Der Punkt, an dem die Gewichtskraft des Hubbettes angreift, ist dann nicht veränderbar. Damit lässt sich diese Befestigung insgesamt stabiler und sicherer ausführen. Die wirkenden Kräfte können einfacher abgetragen werden, wenn diese konstant in einem Punkt angreifen und dieser Punkt nicht veränderbar ist.

Bei dieser Ausgestaltung nach Anspruch 1 sind nach der vorliegenden Erfindung die Längsrichtungen der beiden Teile der Arme des Lagerungselementes ausgehend vom Verbindungspunkt der beiden Arme des Lagerungselementes zu den beiden Enden des jeweiligen Arms des Lagerungselementes quer zur Längsrichtung der Arme gegeneinander versetzt.

Weiterhin sind die beiden Teile des ersten Armes und die beiden Teile des zweiten Armes lediglich im Bereich des Verbindungspunktes der beiden Arme in ihren Abmessungen reduziert. Auf der verbleibenden Länge der beiden Teile des ersten und des zweiten Arms werden diese Arme mit einer größeren Breite ausgelegt.

Im zusammengeklappten Zustand können die Arme durch den seitlichen Versatz der Längsrichtungen der beiden Teile direkt aufeinander liegen. Vorteilhaft wird dabei Einbauraum gespart.

Dies wird erreicht, indem die Längsrichtungen der beiden Teile der beiden Arme derart gegeneinander versetzt sind, dass im zusammengeklappten Zustand des Hubbettes der Teil des einen Arms, der den ersten Befestigungspunkt aufweist, oberhalb des Teils des anderen Arms angeordnet ist, der den zweiten Befestigungspunkt aufweist.

Erfindungsgemäß liegen die Teile der Arme im zusammengeklappten Zustand des Hubbettes direkt aufeinander.

Soweit dabei das Verbindungselement an einem ersten Ende eines der Arme angebracht ist, ist dieses Verbindungselement in diesem zusammengeklappten Zustand des Hubbettes oberhalb der Arme des Lagerungselementes angeordnet.

Soweit das Verbindungselement an einem zweiten Ende eines der Arme angebracht ist, ist dieses Verbindungselement in diesem zusammengeklappten Zustand des Hubbettes unterhalb der Arme des Lagerungselementes angeordnet.

Bei der Ausgestaltung des Lagerungselementes nach Anspruch 2 ist in der abgesenkten Position des Hubbettes das zweite Ende des Verbindungselementes, in dem das Verbindungselement
> entweder wand- und/oder deckenseitig
   oder
> an dem Rahmenteil des Bettrahmens des Hubbettes drehbeweglich befestigt ist, versetzt in Richtung
> der wand- und/oder deckenseitigen Befestigung des anderen Arms oder
> der Befestigung des anderen Arms am Rahmenteil des Bettrahmens des Hubbettes
   gegenüber dem Schnittpunkt
> einer geraden Verlängerung des Arms, an dem das Verbindungselement angebracht ist,
> mit der Verbindungslinie
   > der wand- und/oder deckenseitigen Befestigung des anderen Arms
   > mit der Befestigung des Verbindungselementes
      oder
   > der Befestigung des anderen Arms am Rahmenteil des Bettrahmens des Hubbettes
   > mit der Befestigung des Verbindungselementes.

Diese konstruktive Gestaltung des Verbindungselementes und dessen Befestigungspunkt hat den Vorteil, dass der Arm, an dem das Verbindungselement angebracht ist, und das Verbindungselement in der vollständig abgesenkten Position des Hubbettes bereits einen Winkel aufweisen, durch den das Verbindungselement gegenüber dem Arm des Lagerungselementes, an dem das Verbindungselement angebracht ist, bei einem Anheben des Hubbettes in die Richtung gedreht wird, die der Endposition der Lagerung des Verbindungselementes relativ zu dem Arm des Lagerungselementes entspricht. Dies ermöglicht einen funktionssicheren Betrieb des Hubbettes.

Der Winkel zwischen dem Arm und dem Verbindungselement wird zum einen definiert durch die Längsachse des Arms als einem Schenkel dieses Winkels und der Verbindungslinie zwischen dem Ende des Verbindungselementes, das an dem Arm angebracht ist und dem anderen Ende der Verbindungselementes, an dem das Verbindungselement entweder wand- und/oder deckenseitig bzw. an dem Rahmenteil des Hubbettes befestigt ist, als dem anderen Schenkel dieses Winkels.

Die Unterscheidungen in diesem Anspruch zwischen der wand- und/oder deckenseitigen Befestigung einerseits und der Befestigung am Rahmenteil des Bettrahmens des Hubbettes andererseits beruht darauf, dass das Verbindungselement am ersten Ende eines der Arme angebracht sein kann oder auch am zweiten Ende eines der Arme.

Bei der Ausgestaltung nach Anspruch 3 ist das Verbindungselement zwischen seinen beiden Enden abgewinkelt.

Dadurch wird erleichtert, dass das Verbindungselement und der Arm des Lagerungselementes, an dem das Verbindungselement angebracht ist, im zusammengeklappten Zustand des Hubbettes übereinander liegen.

Ein Ausführungsbeispiel der Erfindung ist in der Zeichnung dargestellt. Es zeigt:
- Fig. 1:: eine Konstruktion eines Hubbettes mit zwei Lagerungselementen in der oberen Position und
- Fig. 2:: die Konstruktion nach Figur 1 in der abgesenkten Position.

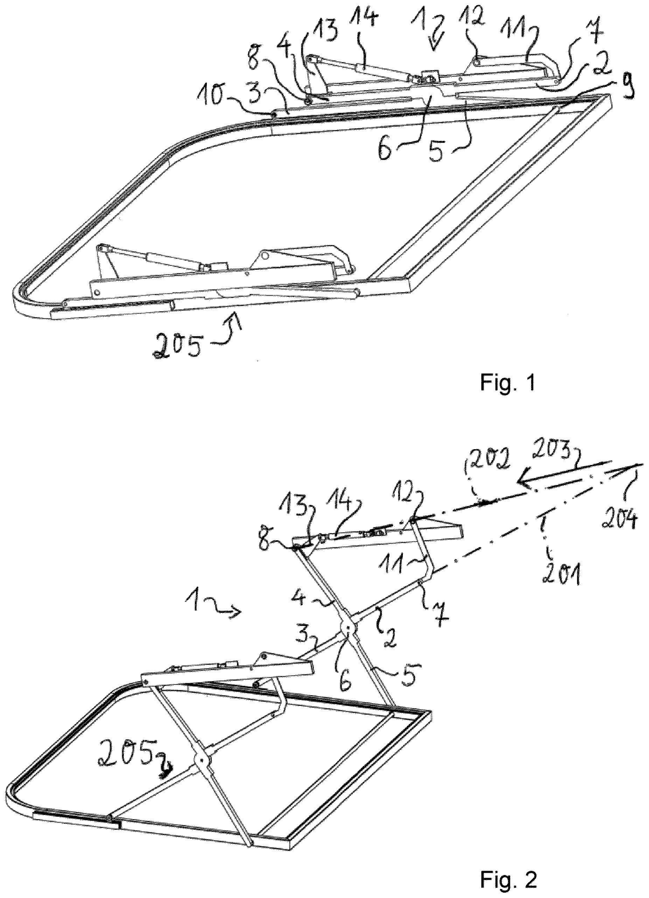

Figur 1 zeigt eine Konstruktion eines Hubbettes mit zwei Lagerungselementen 1, 205 in der oberen Position.

Die Lagerungselemente weisen zwei Arme auf, die aus den Teilen 2 und 3 (Sekundärarm) sowie aus den Teilen 4 und 5 (Primärarm) bestehen. Der aus den Teilen 4 und 5 bestehende Primärarm und der aus den Teilen 2 und 3 bestehende Sekundärarm sind in einem Verbindungspunkt 6 drehbeweglich miteinander verbunden.

Der Sekundärarm (2, 3) weist an seinem ersten Ende einen Befestigungspunkt 7 auf. In dem dargestellten Ausführungsbeispiel ist der Sekundärarm (2, 3) mit diesem Befestigungspunkt 7 wand- und/oder deckenseitig befestigt.

Eine wand- und/ oder deckenseitige Befestigung kann realisiert werden, indem die Befestigung entweder an der Wand oder an der Decke erfolgt. Es ist auch möglich, diese wand- und/oder deckenseitige Befestigung zu realisieren, indem die Befestigung mittels eines Winkelelements sowohl an der Wand als auch an der Decke erfolgt.

In dem dargestellten Ausführungsbeispiel ist die wand- und/oder deckenseitige Befestigung des Sekundärarms (2, 3) mit dem ersten Befestigungspunkt 7 mittelbar realisiert, indem an dem ersten Ende des Sekundärarms (2, 3) in dem Befestigungspunkt 7 ein Verbindungselement 11 mit seinem ersten Ende angebracht ist. Dieses Verbindungselement 11 ist in dem ersten Befestigungspunkt 7 drehbeweglich angebracht. Das Verbindungselement 11 ist an seinem anderen Ende 12 drehbeweglich wand- und/oder deckenseitig befestigt.

Der Sekundärarm (2, 3) weist an seinem zweiten Ende einen Befestigungspunkt 10 auf. In dem dargestellten Ausführungsbeispiel ist der Befestigungspunkt 10 in einer Schiene geführt, die sich am Rahmenteil des Bettrahmens des Hubbettes befindet. Der Sekundärarm (2, 3) ist darüber mit dem Befestigungspunkt 10 drehbeweglich an diesem Rahmenteil des Bettrahmens des Hubbettes befestigt. Der Befestigungspunkt 10 ist in der Schiene verschiebbar.

Der Primärarm (4, 5) ist mit seinem ersten Ende mit dem Befestigungspunkt 8 direkt wand- und/oder deckenseitig befestigt. Das zweite Ende des Primärarms (4, 5) ist mit dem Befestigungspunkt 9 drehbeweglich an dem Rahmenteil des Bettrahmens des Hubbettes befestigt.

Es ist weiterhin noch zu sehen, dass an dem Primärarm (4, 5) ein Hebelelement 13 angebracht ist. Dieses Hebelelement 13 ist in einem Winkel zur Längsrichtung des Primärarms (4, 5) angebracht und bildet einen Angriffspunkt für eine Gasdruckfeder 14. Der andere Punkt der Gasdruckfeder 14 ist wand- und/oder deckenseitig befestigt. Die Gasdruckfeder 14 übt eine Kraft aus, so dass die Gasdruckfeder 14 auseinander gedrückt wird. Über das Hebelelement 13 wird das Hubbett durch die Gasdruckfeder 14 in der oberen Position gehalten.

Es ist weiterhin zu sehen, dass das Verbindungselement 11 zwischen seinen beiden Enden abgewinkelt ist. Dadurch wird vorteilhaft erreicht, dass sich dieses Verbindungselement 11 in der oberen Position des Hubbettes oberhalb des Teils 2 des Sekundärarms (2, 3) des Lagerungselementes 1 befindet. Dadurch ist das Lagerungselement 1 in dieser Position in seiner Ausdehnung kompakt. Da das Verbindungselement 11 abgewinkelt ist, wird die Verbindung des Verbindungselementes 11 zu dem Befestigungspunkt 7 des Sekundärarms (2, 3) gewährleistet.

Der Verbindungspunkt 6 befindet sich in der Länge sowohl des Primär- (4, 5) als auch des Sekundärarms (2, 3) zwischen dem ersten Befestigungspunkt (8, 7) und dem zweiten Befestigungspunkt (9, 10),

Figur 2 zeigt die Konstruktion nach Figur 1 in der abgesenkten Position. Gleiche Teile zur Figur 1 sind mit den gleichen Bezugszeichen versehen.

In Figur 2 sind zwei Hilfslinien 201 und 202 eingezeichnet.

Die strickpunktierte Hilfslinie 201 stellt eine gerade Verlängerung des Sekundärarms (2, 3) dar, an dem das Verbindungselement 11 angebracht ist.

Die strichpunktierte Hilfslinie 202 stellt eine Verbindungslinie der wand- und/oder deckenseitigen Befestigung 8 des anderen Primärarms (2, 3) mit dem zweiten Ende 12 des Verbindungselementes 11 dar.

Es ist zu sehen, dass das zweite Ende 12 des Verbindungselementes 11 gegenüber dem Schnittpunkt 204 der beiden Hilfslinie 201 und 202 in Richtung des ersten Befestigungspunktes 8 des Primärarms 2, 3 versetzt ist (Richtung des Pfeils 203).

Dadurch wird vorteilhaft erreicht, dass bei einem Anheben des Hubbettes das Verbindungselement 11 gegenüber der Längsrichtung des Sekundärarms (2, 3) so gedreht wird, dass dieses Verbindungselement 11 in der oberen Position des Hubbettes richtig angeordnet ist gegenüber dem Teil 2 des Sekundärarm (2, 3). Wäre das zweite Ende des Verbindungselementes 11 in diesem Schnittpunkt 204 befestigt, wäre die Anordnung insofern metastabil, als dass nicht eindeutig definiert wäre, in welche Richtung das Verbindungselement 11 bei einem Anheben des Hubbettes aus der abgesenkten Position in die obere Position dreht. Es könnte passieren, dass das Verbindungselement 11 in die "falsche" Richtung dreht, so dass der Bewegungsablauf insgesamt gestört wird.

In der Darstellung der Figur 2 ist zu sehen, dass der zweite Befestigungspunkt 10 des Sekundärarms (2, 3) in einer Schiene geführt ist, so dass dieser in Längsrichtung des Rahmenteils des Rahmens des Hubbettes verschiebbar ist.

In der Darstellung der Figur 2 ist zu sehen, dass aufgrund der Drehung des Hebelelementes 13 mit der Drehung des Primärarms (4, 5) der Hebelarm mit dem die Gasdruckfeder 14 an dem Drehpunkt 8 des ersten Befestigungspunktes des Primärarms (4, 5) angreift, so weit reduziert ist, dass von der Gasdruckfeder 14 lediglich ein derart geringes Drehmoment erzeugt wird, das nicht ausreicht, um das Hubbett aus der abgesenkten Position anzuheben. Vorteilhaft ist die Konstruktion so ausgelegt, dass das Hubbett aus dieser abgesenkten Position mit einem begrenzten Kraftaufwand angehoben werden kann. Wenn das Hubbett bereits angehoben ist, unterstützt der größer werdende Hebelarm des Hebelelementes 13 die weitere Drehbewegung zur Anhebung des Hubbettes in die obere Position.

Insgesamt ergibt sich damit eine stabile und sichere Befestigung eines Hubbettes, das zudem einfach zu bedienen ist.

Aus den Figuren 1 und 2 ist auch zu sehen, dass die beiden Teile 2, 3 des Sekundärarms (2, 3) ausgehend von dem Verbindungspunkt 6 quer zur Längsrichtung der beiden Teile 2, 3 gegeneinander versetzt sind. Entsprechendes gilt für die beiden Teile 4, 5 des Primärarms (4, 5).

Dies erweist sich insofern als vorteilhaft, als dass in der oberen Position des Hubbettes das Teil 2 des Sekundärarms (2, 3) und das Teil 5 des Primärarms (4, 5) unmittelbar aufeinander liegen, sowie auch das Teil 4 des Primärarms (4, 5) und das Teil 3 des Sekundärarms (2, 3). Dadurch lässt sich die Gesamtkonstruktion platzsparend im Deckenbereich eines Fahrzeugs verstauen. Es ist in Figur 1 ebenfalls zu sehen, dass das Verbindungselement 11 durch seine abgewinkelte Form in der oberen Position des Hubbettes oberhalb des Teils 2 des Sekundärarms (2, 3) angeordnet ist.

Es ist zu sehen, dass das Hubbett mittels zwei Lagerungselementen 1, 205 angebracht ist, die an zwei sich gegenüberliegenden Seiten des Rahmenteils des Rahmens des Hubbettes angebracht sind.

Wenigstens einer der beiden ersten Befestigungspunkte 7, 8 des Primärarms (4, 5) sowie des Sekundärarms (2, 3) weist entweder eine Befestigung mittels eines Verbindungselementes 11 oder eine Befestigung des Befestigungspunktes 7, 8 auf, die in einem Langloch oder in einer Schiene geführt ist. Ebenso weist wenigstens einer der beiden zweiten Befestigungspunkte 10, 9 des Primärarms (4, 5) sowie des Sekundärarms (2, 3) entweder eine Befestigung mittels eines Verbindungselementes 11 oder eine Befestigung des Befestigungspunktes 7, 8 auf, die in einem Langloch oder in einer Schiene geführt ist. Die Gesamtanordnung jedes der Lagerungselemente 1, 205 weist nach der vorliegenden Erfindung wenigstens eine Befestigung mittels des Verbindungselementes 11 auf.

Dadurch lässt sich vorteilhaft die Hubbewegung des Hubbettes realisieren.

## Patentansprüche

1. Lagerungselement (1, 2) für ein Hubbett,
> wobei das Lagerungselement (1, 2) einen Primär- (4, 5) und einen Sekundärarm (2, 3) aufweist,
> wobei sowohl der Primär- (4, 5) als auch der Sekundärarm (2, 3) an ihrem ersten Ende einen ersten Befestigungspunkt (8, 7) aufweisen zur wand- und/oder deckenseitigen Befestigung,
> wobei sowohl der Primär- (4, 5) als auch der Sekundärarm (2, 3) mit dem ersten Befestigungspunkt (8, 7) drehbeweglich gelagert sind,
> wobei sowohl der Primär- (4, 5) als auch der Sekundärarm (2, 3) einen zweiten Befestigungspunkt (9, 10) aufweisen, der sich an dem zweiten Ende des Primär- (4, 5) sowie des Sekundärarms (2, 3) befindet,
> wobei sowohl der Primär- (4, 5) als auch der Sekundärarm (2, 3) mit dem zweiten Befestigungspunkt (9, 10) an einem Rahmenteil des Bettrahmens des Hubbettes drehbeweglich befestigbar sind,
> wobei der Primär- (4, 5) und der Sekundärarm (2, 3) in einem Verbindungspunkt (6) drehbeweglich miteinander verbunden sind,
> wobei sich dieser Verbindungspunkt in der Länge sowohl des Primär- (4, 5) als auch des Sekundärarms (2, 3) zwischen dem ersten Befestigungspunkt (8, 7) und dem zweiten Befestigungspunkt (9, 10) befindet,
> wobei zumindest einer der beiden Befestigungspunkte (7) des einen Arms (2, 3) mittelbar über ein Verbindungselement (11) befestigt ist,
> wobei das Verbindungselement (11) mit seinem ersten Ende drehbeweglich an dem jeweiligen Befestigungspunkt (7) des betreffenden Arms (2, 3) angebracht ist und mit seinem zweiten Ende (12) drehbeweglich
> entweder wand- und/oder deckenseitig
> oder an dem Rahmenteil des Bettrahmens des Hubbettes befestigbar ist,
> wobei die Längsrichtungen der beiden Teile (2, 3) des ersten Arms (2, 3) und der beiden Teile (4, 5) des zweiten Arms (4, 5) des Lagerungselementes (1, 2)
> ausgehend vom Verbindungspunkt (6) der beiden Arme (2, 3; 4, 5) des Lagerungselementes (1, 2)
> zu den beiden Enden (8, 9; 7, 10) des jeweiligen Arms (4, 5; 2, 3) des Lagerungselementes (1, 2)
quer zur Längsrichtung der Arme (2, 3; 4, 5) gegeneinander versetzt sind,
> so dass die Längsrichtungen der beiden Teile (2, 3) des ersten Arms (2, 3) und der beiden Teile (4, 5) des zweiten Arms (4, 5) derart gegeneinander versetzt sind
> dass im zusammengeklappten Zustand des Hubbettes
> der Teil (2) des einen Arms (2, 3), der den ersten Befestigungspunkt (7) aufweist,
> oberhalb des Teils (5) des anderen Arms (4, 5) angeordnet ist, der den zweiten Befestigungspunkt (9) dieses anderen Arms (4, 5) aufweist,
**dadurch gekennzeichnet**,
> dass die beiden Teile (2, 3) des ersten Arms (2, 3) und die beiden Teile (4, 5) des zweiten Arms (4, 5) lediglich im Bereich des Verbindungspunktes (6) der beiden Arme in ihren Abmessungen reduziert sind und auf der verbleibenden Länge der beiden Teile (2, 3) des ersten Arms (2, 3) und der beiden Teile (4, 5) des zweiten Arms (4, 5) mit einer größeren Breite ausgelegt sind, so dass diese Teile (2, 3; 4, 5) des jeweiligen Arms mit den Teilen (4, 5; 2, 3) des anderen Arms im zusammengeklappten Zustand des Lagerungselementes (1, 2) direkt aufeinander liegen.

2. Lagerungselement nach Anspruch 1,
**dadurch gekennzeichnet, dass** in der abgesenkten Position des Hubbettes das zweite Ende (12) des Verbindungselementes (11),
> in dem das Verbindungselement (11)
> entweder wand- und/oder deckenseitig
> oder an dem Rahmenteil des Bettrahmens des Hubbettes drehbeweglich befestigbar ist,
> in Richtung
> der wand- und/oder deckenseitigen Befestigung (8) des anderen Arms (4, 5)
> oder der Befestigung des anderen Arms am Rahmenteil des Bettrahmens des Hubbettes
versetzt ist
gegenüber dem Schnittpunkt
> einer geraden Verlängerung (201) des Arms (2, 3), an dem das Verbindungselement (11) angebracht ist,
> mit der Verbindungslinie
> der wand- und/oder deckenseitigen Befestigung (8) des anderen Arms (2, 3)
> mit dem zweiten Ende (12) des Verbindungselementes (11)
oder
> der Befestigung des anderen Arms am Rahmenteil des Bettrahmens des Hubbettes
> mit der Befestigung des Verbindungselementes.

3. Lagerungselement nach einem der Ansprüche 1 oder 2,
**dadurch gekennzeichnet, dass** das Verbindungselement (11) zwischen seinen beiden Enden (7, 12) abgewinkelt ist.

## Claims

1. Supporting element (1, 2) for an elevator bed,
- wherein the supporting element (1, 2) has a primary (4, 5) and a secondary arm (2, 3),
- wherein both the primary (4, 5) and the secondary arm (2, 3) have at the first end thereof a first attachment point (8, 7) for attaching to the wall and/or ceiling,
- wherein both the primary (4, 5) and the secondary arm (2, 3) are rotatably mounted by the first attachment point (8, 7),
- wherein both the primary (4, 5) and the secondary arm (2, 3) have a second attachment point (9, 10) located at the second end of the primary (4, 5) and the secondary arm (2, 3),
- wherein both the primary (4, 5) and the secondary arm (2, 3) are rotatably attachable to a frame part of the bed frame of the elevator bed by the second attachment point (9, 10),
- wherein the primary (4, 5) and the secondary arm (2, 3) are rotatably connected to one another in a connection point (6),
- wherein this connection point is located in the length of both the primary (4, 5) and the secondary arm (2, 3) between the first attachment point (8, 7) and the second attachment point (9, 10),
- wherein at least one of the two attachment points (7) of the one arm (2, 3) is indirectly attached by means of a connecting element (11),
- wherein the connecting element (11) is rotatably fastened by its first end to the respective attachment point (7) of the arm (2, 3) in question and is rotatably attachable by its second end (12)
- either to the wall and/or the ceiling
- or to the frame part of the bed frame of the elevator bed,
- wherein the longitudinal directions of the two parts (2, 3) of the first arm (2, 3) and the two parts (4, 5) of the second arm (4, 5) of the supporting element (1, 2)
- from the connection point (6) of the two arms (2, 3; 4, 5) of the supporting element (1, 2)
- to the two ends (8, 9; 7, 10) of the respective arm (4, 5; 2, 3) of the supporting element (1, 2)
are offset in respect of one another transversely to the longitudinal direction of the arms (2, 3; 4, 5),
- such that the longitudinal directions of the two parts (2, 3) of the first arm (2, 3) and the two parts (4, 5) of the second arm (4, 5) are offset in respect of one another in such a way
- that when the elevator bed is folded up
- the part (2) of the one arm (2, 3) that comprises the first attachment point (7)
- is arranged above the part (5) of the other arm (4, 5) that comprises the second attachment point (9) of this other arm (4, 5),
**characterised in that**
- the two parts (2, 3) of the first arm (2, 3) and the two parts (4, 5) of the second arm (4, 5) are reduced in their dimensions only in the vicinity of the connection point (6) of the two arms and on the remaining length of the two parts (2, 3) of the first arm (2, 3) and the two parts (4, 5) of the second arm (4, 5) are configured with a greater width, such that these parts (2, 3; 4, 5) of the respective arm and the parts (4, 5; 2, 3) of the other arm lie directly on top of one another when the supporting element (1, 2) is in the folded-up state.

2. The supporting element according to claim 1,
characterised that in the lowered position of the elevator bed, the second end (12) of the connecting element (11),
- in which the connecting element (11) is rotatably attachable
- either to the wall and/or the ceiling
- or to the frame part of the bed frame of the elevator bed,
is offset in the direction of
- the wall attachment and/or ceiling attachment (8) of the other arm (4, 5)
- or the attachment of the other arm to the frame part of the bed frame of the elevator bed
with respect to the point of intersection
- of a straight extension (201) of the arm (2, 3) to which the connecting element (11) is fastened
- and the connecting line
- between the wall attachment and/or ceiling attachment (8) of the other arm (2, 3)
- and the second end (12) of the connecting element (11)
or
- between the attachment of the other arm to the frame part of the bed frame of the elevator bed
- and the attachment of the connecting element.

3. The supporting element according to one of claims 1 or 2, **characterised in that** the connecting element (11) is angled between its two ends (7, 12).

## Revendications

1. Élément support (1, 2) pour une couchette escamotable vers le haut,
> l'élément de support (1, 2) étant muni d'un bras primaire (4, 5) et d'un bras secondaire (2, 3),
> le bras primaire (4, 5) et le bras secondaire (2, 3) étant tous deux munis à leur première extrémité d'un premier point de fixation (8, 7) pour la fixation côté mur et/ou côté plafond,
> le bras primaire (4, 5) et le bras secondaire (2, 3) étant tous deux montés mobiles en rotation avec le premier point de fixation (8, 7),
> le bras primaire (4, 5) et le bras secondaire (2, 3) étant tous deux munis d'un deuxième point de fixation (9, 10) situé à la deuxième extrémité du bras primaire (4, 5) ainsi que du bras secondaire (2, 3),
> le bras primaire (4, 5) et le bras secondaire (2, 3) pouvant tous deux être fixés par le deuxième point de fixation (9, 10) à une partie de cadre du sommier de la couchette escamotable vers le haut de façon mobile en rotation,
> le bras primaire (4, 5) et le bras secondaire (2, 3) étant reliés l'un à l'autre de manière pivotante en un point de liaison (6),
> ce point de liaison se trouvant dans la longueur tant du bras primaire (4, 5) que du bras secondaire (2, 3) entre le premier point de fixation (8, 7) et le deuxième point de fixation (9, 10),
> au moins l'un des deux points de fixation (7) de l'un des bras (2, 3) étant fixé indirectement par un élément de liaison (11),
> l'élément de liaison (11) étant monté, de façon mobile en rotation, par sa première extrémité sur le point de fixation (7) respectif du bras (2, 3) concerné, et pouvant être fixé mobile en rotation par sa deuxième extrémité (12)
> soit du côté du mur et/ou du plafond
> soit sur la partie de cadre du sommier de la couchette escamotable vers le haut,
> les directions longitudinales des deux parties (2, 3) du premier bras (2, 3) et des deux parties (4, 5) du deuxième bras (4, 5) de l'élément support (1, 2),
> en partant du point de jonction (6) des deux bras (2, 3 ; 4, 5) de l'élément support (1, 2)
> vers les deux extrémités (8, 9 ; 7, 10) du bras respectif (4, 5 ; 2, 3) de l'élément support (1, 2),
sont décalées l'une par rapport à l'autre transversalement à la direction longitudinale des bras (2, 3 ; 4, 5)
> de sorte que les directions longitudinales des deux parties (2, 3) du premier bras (2, 3) et des deux parties (4, 5) du deuxième bras (4, 5) sont décalées l'une par rapport à l'autre de telle sorte
> qu'à l'état replié de la couchette escamotable vers le haut
> la partie (2) d'un bras (2, 3), qui est munie du premier point de fixation (7),
> est disposée au-dessus de la partie (5) de l'autre bras (4, 5), qui est munie du deuxième point de fixation (9) de cet autre bras (4, 5),
**caractérisé en ce que**
> les deux parties (2, 3) du premier bras (2, 3) et les deux parties (4, 5) du second bras (4, 5) sont réduites en dimensions uniquement au niveau du point de jonction (6) des deux bras, et sont conçues avec une plus grande largeur sur la longueur restante des deux parties (2, 3) du premier bras (2, 3) et des deux parties (4, 5) du second bras (4, 5), de sorte que ces parties (2, 3 ; 4, 5) de chaque bras sont directement superposées aux parties (4, 5 ; 2, 3) de l'autre bras lorsque l'élément de support (1, 2) est replié.

2. Élément support selon la revendication 1,
**caractérisé en ce que,** dans la position abaissée de la couchette escamotable vers le haut, la deuxième extrémité (12) de l'élément de liaison (11 ),
> avec laquelle l'élément de liaison (11) peut être fixé de manière mobile en rotation
> soit du côté du mur et/ou du plafond
> soit à la partie du cadre du sommier de la couchette escamotable vers le haut,
> est décalée en direction
> de la fixation (8) du côté du mur et/ou du plafond de l'autre bras (4, 5)
> ou de la fixation de l'autre bras à la partie de cadre du sommier de la couchette escamotable vers le haut
par rapport au point d'intersection
> d'un prolongement rectiligne (201) du bras (2, 3) sur lequel est monté l'élément de liaison (11),
> avec la ligne de jonction
> de la fixation (8) côté mur et/ou plafond de l'autre bras (2, 3)
> avec la deuxième extrémité (12) de l'élément de liaison (11)
ou
> de la fixation de l'autre bras à la partie cadre du sommier de la couchette escamotable vers le haut
> avec la fixation de l'élément de liaison.

3. Élément support selon l'une des revendications 1 ou 2, **caractérisé en ce que** l'élément de liaison (11) est coudé entre ses deux extrémités (7, 12).
